(19) Europäisches Patentamt
European Patent Office
Office européen des brevets

(11) **EP 4 141 518 A1**

(12) **EUROPEAN PATENT APPLICATION**
published in accordance with Art. 153(4) EPC

(43) Date of publication:
**01.03.2023 Bulletin 2023/09**

(21) Application number: **21804624.1**

(22) Date of filing: **19.03.2021**

(51) International Patent Classification (IPC):
*G02B 27/01* *(2006.01)*

(52) Cooperative Patent Classification (CPC):
**G02B 27/01**

(86) International application number:
**PCT/CN2021/081908**

(87) International publication number:
**WO 2021/227654 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 CN 202010413441**

(71) Applicant: **Huawei Technologies Co., Ltd.
Shenzhen, Guangdong 518129 (CN)**

(72) Inventors:
• **YAN, Yunfei**
**Shenzhen, Guangdong 518129 (CN)**
• **WANG, Jinlei**
**Shenzhen, Guangdong 518129 (CN)**
• **DENG, Ning**
**Shenzhen, Guangdong 518129 (CN)**

(74) Representative: **Gill Jennings & Every LLP
The Broadgate Tower
20 Primrose Street
London EC2A 2ES (GB)**

(54) **HEAD-UP DISPLAY, DISPLAY METHOD AND DISPLAY SYSTEM**

(57) A head-up display apparatus, a display method, and a display system relate to the field of head-up display technologies. The head-up display apparatus includes: a multi-focus image generation unit (1) with a plurality of different focal lengths, a light diffuser screen (2), and an optical imaging unit (3). The multi-focus image generation unit (1) is configured to generate a plurality of images, and focal planes of the plurality of images are located in different positions. The light diffuser screen (2) is disposed on an image plane of the multi-focus image generation unit (1), and is configured to receive the plurality of images generated by the multi-focus image generation unit (1), and diffuse light beams of the plurality of images. The optical imaging unit (3) is configured to image a plurality of images projected to the light diffuser screen (2), so as to form a plurality of images with different imaging distances. The head-up display apparatus, the display method, and the display system can implement multi-screen display, and have a simple structure.

FIG. 2

## Description

This application claims priority to Chinese Patent Application No. 202010413441.X, filed with the China National Intellectual Property Administration on May 15, 2020 and entitled "HEAD-UP DISPLAY APPARATUS, DISPLAY METHOD, AND DISPLAY SYSTEM", which is incorporated herein by reference in its entirety.

## TECHNICAL FIELD

This application relates to the field of head-up display technologies, and in particular, to a head-up display apparatus, a display method, and a display system.

## BACKGROUND

A head-up display (Head-Up Display, HUD) apparatus starts to be applied to a vehicle. In a driving process, a driver does not need to shift a sight line to an instrument panel, so that the driver can ensure normal driving while paying attention to various instrument information of the vehicle. To further enable a driver to obtain information such as a road condition, an SMS message, a phone call, and an email, a head-up display apparatus that can obtain different imaging distances, that is, a multi-screen head-up display apparatus, needs to be designed.

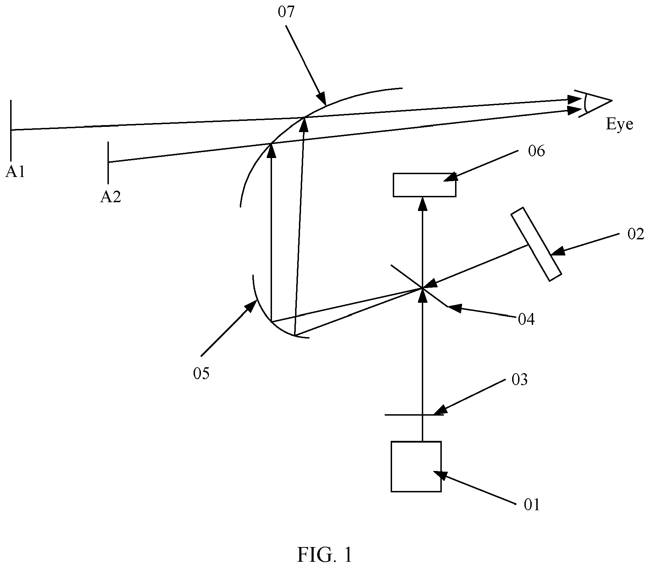

FIG. 1 shows an existing dual-screen head-up display apparatus. The head-up display apparatus includes a first projection module O1, a second projection module 02, a penetrating diffusion plate 03, a polarizing beam splitter 04, a free form mirror 05, and an extinction mechanism 06. That is, a light beam that carries first image information and that is generated by the first projection module 01 is projected to the polarizing beam splitter 04 by using the penetrating diffusion plate 03, and is divided into two beams of linearly polarized light. One light beam irradiates the extinction mechanism 06, and the other light beam irradiates the free form mirror 05, is reflected to a windshield 07, and forms a first image by reflection to enter a human eye, to form a far distance image A I. The second projection module 02 projects second image information to the polarizing beam splitter 04; and a light beam irradiates the free form mirror 05, is reflected to the windshield 07, and forms a second image by reflection to enter the human eye, to form a near distance image A2.

However, the head-up display apparatus shown in FIG. 1 transmits corresponding generated images to the polarizing beam splitter by using the two projection modules (which may be referred to as a dual-optical machine structure), so that a driver sees information displayed on the far distance image A1 and information displayed on the near distance image A2. When multi-screen display needs to be performed, a plurality of projection modules are required, and a technical problem is as follows: A structure of an entire head-up display apparatus is complex.

## SUMMARY

This application provides a head-up display apparatus, a display method, and a display system, mainly intending to provide a head-up display apparatus that can implement multi-screen display and that has a simple structure.

To achieve the foregoing objectives, the following technical solutions are used in this application.

According to a first aspect, this application provides a head-up display apparatus, including: a multi-focus image generation unit with a plurality of different focal lengths, a light diffuser screen, and an optical imaging unit, where the multi-focus image generation unit is configured to generate a plurality of images, focal planes of the plurality of images are located in different positions, and the light diffuser screen is disposed on an image plane of the multi-focus image generation unit, and is configured to receive the plurality of images generated by the multi-focus image generation unit, and diffuse light beams of the plurality of images. The optical imaging unit is configured to image a plurality of images projected to the light diffuser screen, so as to form a plurality of images with different imaging distances.

In the head-up display apparatus provided in this application, the multi-focus image generation unit has a plurality of focal lengths and can generate a plurality of images, and focal planes of the plurality of images are located in different positions. In this way, the plurality of images that have different focal planes are magnified by the light diffuser screen, and then a plurality of magnified images projected to the light diffuser screen are imaged by the optical imaging unit, to form a plurality of images with different imaging distances, thereby implementing multi-screen display. Compared with an existing technology of implementing multi-screen display by using a plurality of image generation units with different focal lengths, one multi-focus image generation unit replaces the plurality of image generation units with different focal lengths. Therefore, the head-up display apparatus provided in this application has a simple structure and a significantly decreased volume.

In a possible implementation of the first aspect, the head-up display apparatus further includes a time sequence control unit, where the time sequence control unit is configured to control a moment at which one of the plurality of images generated by the multi-focus image generation unit is switched to and a moment at which one of the plurality of focal lengths is switched to, so that the moment at which one of the plurality of images is switched to and the moment at which one of the focal lengths is switched to are equal, and are less than or equal to reaction time of a human eye. The time sequence control unit is configured to control the moment at which one of the images generated by the multi-focus image generation unit is switched to and control the moment at which one of the focal lengths of the multi-focus image generation unit is switched to. The moment at which one of the images generated by the multi-focus image generation unit is switched to and a moment at which one of the focal lengths of the multi-focus image generation unit is switched to are equal and are less than or equal to the reaction time of the human eye. In this way, it is felt that there is multi-screen display at a same time. For example, when the multi-focus image generation unit displays instrument information at a first moment and displays navigation information at a second moment after switching, because a time difference between the first moment and the second moment is less than or equal to the reaction time of the human eye, finally the instrument information and the navigation information are simultaneously displayed in front of the human eye.

In a possible implementation of the first aspect, the multi-focus image generation unit includes an image generation element and a spatial light modulator, the image generation element is configured to generate a plurality of images, and the time sequence control unit is configured to control a moment at which one of the plurality of images generated by the image generation element is switched to. The spatial light modulator is disposed on an optical path between the image generation element and the light diffuser screen. The spatial light modulator loads different phase information at different moments to optical waves of the images generated by the image generation element, so that the plurality of images generated by the image generation element at different moments correspond to different focal lengths. The time sequence control unit is configured to control a moment at which the phase information is switched to, and the moment at which the phase information is switched to is equal to the moment at which one of the images is switched to. The phase information loaded by the spatial light modulator to the optical waves of the images generated by the image generation element is changed so as to change a focal length of the image generation element. The moment at which the phase information is switched to and the moment at which one of the images is switched to are both less than or equal to the reaction time of the human eye, so that it is felt that there is multi-screen display at a same time.

In a possible implementation of the first aspect, the multi-focus image generation unit includes an image generation element and a zoom liquid lens, the image generation element is configured to generate a plurality of images, and the time sequence control unit is configured to control a moment at which one of the plurality of images generated by the image generation element is switched to. The zoom liquid lens is disposed on an optical path between the image generation element and the light diffuser screen. Curvature of a light-exiting surface of the zoom liquid lens at different moments is different, so that the plurality of images generated by the image generation element at different moments correspond to different focal lengths. The time sequence control unit is configured to control a moment at which the curvature is switched to, and the moment at which the curvature is switched to is equal to the moment at which one of the images is switched to. The focal length of the image generation element is changed by changing the curvature of the light-exiting surface of the zoom liquid lens. The moment at which the curvature is switched to and the moment at which one of the images is switched to are both less than or equal to the reaction time of the human eye, so that it is felt that there is multi-screen display at a same time.

In a possible implementation of the first aspect, the multi-focus image generation unit includes an image generation element, a fixed-focus lens, and a first driving unit, the image generation element is configured to generate a plurality of images, and the time sequence control unit is configured to control a moment at which one of the plurality of images generated by the image generation element is switched to. The fixed-focus lens is disposed on an optical path between the image generation element and the light diffuser screen. The first driving unit is connected to the fixed-focus lens, and the first driving unit drives the fixed-focus lens to move to different positions at different moments, so that the plurality of images generated by the image generation element at different moments correspond to different focal lengths. The time sequence control unit is configured to control a moment at which one of the positions is switched to, and the moment at which one of the positions is switched to is equal to the moment at which one of the images is switched to. The focal length of the image generation element is changed by using the first driving unit to drive the fixed-focus lens to move relative to the image generation element. The moment at which one of the positions is switched to and the moment at which one of the images is switched to are both less than or equal to the reaction time of the human eye, so that it is felt that there is multi-screen display at a same time.

In a possible implementation of the first aspect, the fixed-focus lens is installed on a mobile station, the first driving unit includes a telescopic cylinder, and the telescopic cylinder is connected to the mobile station. The fixed-focus lens is driven to move by using the telescopic cylinder to drive the mobile station to move along an imaging optical path of the image generation element.

In a possible implementation of the first aspect, the head-up display apparatus further includes a second driving unit, where the second driving unit is connected to the light diffuser screen, and the second driving unit controls the light diffuser screen to move to an image plane of the image generated by the multi-focus image generation unit. During specific implementation, when the multi-focus image generation unit has a first focal length, the second driving unit may drive the light diffuser screen to move to a corresponding first image plane of the multi-focus image generation unit, so as to receive an image projected by the multi-focus image generation unit. When the multi-focus image generation unit has a second focal length, the second driving unit further drives the light diffuser screen to move to a corresponding second image plane of the multi-focus image generation unit. That is, the second driving unit drives the light diffuser screen to move along an imaging optical path of the multi-focus image generation unit, so as to receive imaging of the multi-focus image generation unit at different moments.

In a possible implementation of the first aspect, the light diffuser screen is disposed on a support platform, the second driving unit includes a driving motor, the support platform is connected to the driving motor, and the driving motor can drive the support platform to move along the imaging optical path of the multi-focus image generation unit. The driving motor is configured to drive the support platform to move, so as to make the light diffuser screen move. This structure is simple and is convenient to implement.

In a possible implementation of the first aspect, the multi-focus image generation unit includes an image generation element and a spatial light modulator, and the image generation element has a plurality of image generation areas. The spatial light modulator is disposed on an optical path between the image generation element and the light diffuser screen. The spatial light modulator has a plurality of modulation areas, each modulation area corresponds to one image generation area, and the plurality of modulation areas load different phase information to optical waves of images generated in corresponding image generation areas, so that a plurality of images generated by the image generation element at a same moment correspond to different focal lengths. The image generation element has a plurality of image generation areas, and may generate a plurality of images at a same moment, and the spatial light modulator has a plurality of modulation areas that are in a one-to-one correspondence with the plurality of image generation areas. Phase information loaded by the plurality of modulation areas to optical waves of images generated in corresponding image generation areas is different. In this way, a plurality of images generated at a same moment may correspond to different focal lengths, thereby implementing multi-screen display at a same time.

In a possible implementation of the first aspect, the multi-focus image generation unit includes an image generation element and a zoom liquid lens, and the image generation element has a plurality of image generation areas. The zoom liquid lens is disposed on an optical path between the image generation element and the light diffuser screen. The zoom liquid lens has a plurality of lens areas, each lens area corresponds to one image generation area, and curvature of light-exiting surfaces of the plurality of lens areas is different, so that a plurality of images generated by the image generation element at a same moment correspond to different focal lengths. The image generation element has a plurality of image generation areas, and may generate a plurality of images at a same moment, and the zoom liquid lens has a plurality of lens areas that are in a one-to-one correspondence with the plurality of image generation areas. Curvature of light-exiting surfaces of the plurality of lens areas is different. In this way, a plurality of images generated at a same moment may correspond to different focal lengths, thereby implementing multi-screen display at a same time.

In a possible implementation of the first aspect, the head-up display apparatus includes a plurality of light diffuser screens, each light diffuser screen corresponds to one image plane of the image generated by the multi-focus image generation unit, and different light diffuser screens are located on different image planes. The plurality of light diffuser screens are used, so that the plurality of light diffuser screens are disposed in a one-to-one correspondence with image planes of the plurality of images generated by the multi-focus image generation unit, so as to receive imaging of the multi-focus image generation unit.

In a possible implementation of the first aspect, a nano scattering coating or a liquid crystal molecular cooling coating is formed on a scattering surface of the light diffuser screen. A nano scattering coating and a liquid crystal molecular cooling coating are formed on the scattering surface of the light diffuser screen, to reduce roughness of the scattering surface of the light diffuser screen, so that an image magnified by the optical imaging unit does not have a blurred edge, obvious noise, and granular sensation.

In a possible implementation of the first aspect, the light diffuser screen is made of glass ceramics. Diffusion is implemented by using a microcrystalline molecule in the glass ceramics. The microcrystalline molecule is at a nanometer scale, and after being magnified by the optical imaging unit, an image has no obvious noise and granular sensation, thereby forming high-definition display.

In a possible implementation of the first aspect, the optical imaging unit includes an aspherical reflector, an aspherical reflector and a convex mirror, or an aspherical reflector and a concave mirror.

According to a second aspect, this application further provides a display method for a head-up display apparatus, where the method may be applied to the head-up display apparatus, and the head-up display apparatus includes a multi-focus image generation unit, a light diffuser screen, and an optical imaging unit. The display method includes:

The multi-focus image generation unit generates a plurality of images, where the multi-focus image generation unit has a plurality of different focal lengths, and focal planes of the plurality of images are located in different positions;

the light diffuser screen disposed on an image plane of the multi-focus image generation unit receives the plurality of images generated by the multi-focus image generation unit, and diffuses light beams of the plurality of images; and

the optical imaging unit images a plurality of images projected to the light diffuser screen to form a plurality of images with different imaging distances.

In the display method for the head-up display apparatus provided in this application, the multi-focus image generation unit has a plurality of different focal lengths, and can generate a plurality of images. Focal planes of the plurality of images are located in different positions, and the light diffuser screen receives the plurality of images generated by the multi-focus image generation unit, and diffuses light beams of the plurality of images. Then, the optical imaging unit images the plurality of images projected to the light diffuser screen to form a plurality of images with different imaging distances, thereby implementing multi-screen display. In the head-up display method provided in this embodiment, multi-screen display is implemented by using an image generation unit with different focal lengths. Compared with an existing technology of implementing multi-screen display by using a plurality of image generation units with different focal lengths, one multi-focus image generation unit replaces the plurality of image generation units with different focal lengths.

In a possible implementation of the second aspect, the head-up display apparatus further includes a time sequence control unit, where the display method further includes: The time sequence control unit controls a moment at which one of the plurality of images generated by the multi-focus image generation unit is switched to and a moment at which one of the plurality of focal lengths is switched to, so that the moment at which one of the plurality of images is switched to and the moment at which one of the focal lengths is switched to are equal, and are less than or equal to reaction time of a human eye. The time sequence control unit is used to control the moment at which one of the images is switched to and the moment at which one of the focal lengths is switched to. The moment at which one of the images is switched to and the moment at which one of the focal lengths is switched to are equal and are less than or equal to the reaction time of the human eye. In this way, it is felt that there is multi-screen display at a same time.

In a possible implementation of the second aspect, the multi-focus image generation unit includes an image generation element and a spatial light modulator, and the image generation element is configured to generate a plurality of images. The display method further includes: The spatial light modulator loads different phase information at different moments to optical waves of the images generated by the image generation element, so that the plurality of images generated by the image generation element at different moments correspond to different focal lengths. The time sequence control unit controls a moment at which one of the images generated by the image generation element is switched to and a moment at which the phase information is switched to, and the moment at which the phase information is switched to is equal to the moment at which one of the images is switched to. The phase information loaded by the spatial light modulator to the optical waves of the images generated by the image generation element is changed so as to change a focal length of the image generation element. The moment at which the phase information is switched to and the moment at which one of the images is switched to are both less than or equal to the reaction time of the human eye, so that it is felt that there is multi-screen display at a same time.

In a possible implementation of the second aspect, the multi-focus image generation unit includes an image generation element and a zoom liquid lens, and the image generation element is configured to generate a plurality of images. The display method further includes: Curvature of a light-exiting surface of the zoom liquid lens at different moments is different, so that the plurality of images generated by the image generation element at different moments correspond to different focal lengths. The time sequence control unit controls a moment at which one of the images generated by the image generation element is switched to and a moment at which the curvature is switched to, and the moment at which the curvature is switched to is equal to the moment at which one of the images is switched to. The focal length of the image generation element is changed by changing the curvature of the light-exiting surface of the zoom liquid lens. The moment at which the curvature is switched to and the moment at which one of the images is switched to are both less than or equal to the reaction time of the human eye, so that it is felt that there is multi-screen display at a same time.

In a possible implementation of the second aspect, the multi-focus image generation unit includes an image generation element, a fixed-focus lens, and a first driving unit, the image generation element is configured to generate a plurality of images, and the first driving unit is connected to the fixed-focus lens. The display method further includes: The first driving unit drives the fixed-focus lens to move to different positions at different moments, so that the plurality of images generated by the image generation element at different moments correspond to different focal lengths. The time sequence control unit controls a moment at which one of the images generated by the image generation element is switched to and a moment at which one of the positions is switched to, and the moment at which one of the positions is switched to is equal to the moment at which one of the images is switched to. The focal length of the image generation element is changed by using the first driving unit to drive the fixed-focus lens to move relative to the image generation element. A moment at which the focal length is switched to and the moment at which one of the images is switched to are both less than or equal to the reaction time of the human eye, so that it is felt that there is multi-screen display at a same time.

In a possible implementation of the second aspect, the light diffuser screen is connected to a second driving unit. The display method further includes: When a focal length of the multi-focus image generation unit is converted, the second driving unit controls the light diffuser screen to move to an image plane of the image generated by the multi-focus image generation unit. The second driving unit is used to drive the light diffuser screen to move, so as to receive images on image planes at different positions.

In a possible implementation of the second aspect, that the second driving unit controls the light diffuser screen to move to an image plane of the image generated by the multi-focus image generation unit includes:

determining an imaging distance V of the head-up display apparatus based on the focal length of the multi-focus image generation unit, where the imaging distance V is a distance between an image plane of the optical imaging unit and an optical center of the optical imaging unit, and then a distance $S$ between a center of the light diffuser screen and the optical center of the optical imaging unit is calculated according to the following formula,

$$S = \frac{fV}{V-f},$$

where

$f$ is a focal length of the optical imaging unit; and the second driving unit drives the light diffuser screen to move to a position in which a distance to the optical center of the optical imaging unit is $S$.

When the light diffuser screen is connected to the second driving unit, that is, the second driving unit drives the light diffuser screen to move, the foregoing method is needed to determine a position to which the light diffuser screen moves, and then the second driving unit is used to drive the light diffuser screen to move.

In a possible implementation of the second aspect, the head-up display apparatus includes a plurality of light diffuser screens, and each light diffuser screen corresponds to one image plane of the images generated by the multi-focus image generation unit. The display method further includes: projecting the image generated by the multi-focus image generation unit to a corresponding light diffuser screen.

In a possible implementation of the second aspect, the multi-focus image generation unit includes an image generation element and a spatial light modulator, and the image generation element has a plurality of image generation areas. The spatial light modulator had a plurality of modulation areas, and each modulation area corresponds to one image generation area. The display method further includes: simultaneously generating images in the plurality of image generation areas, where the plurality of modulation areas load different phase information to optical waves of images generated in corresponding image generation areas, so that a plurality of images generated by the image generation element at a same moment correspond to different focal lengths. The image generation element has a plurality of image generation areas, and may generate a plurality of images at a same moment, and the spatial light modulator has a plurality of modulation areas that are in a one-to-one correspondence with the plurality of image generation areas. Phase information loaded by the plurality of modulation areas to optical waves of images generated in corresponding image generation areas is different. In this way, a plurality of images generated at a same moment may correspond to different focal lengths, thereby implementing multi-screen display at a same time.

In a possible implementation of the second aspect, the multi-focus image generation unit includes an image generation element and a zoom liquid lens, and the image generation element has a plurality of image generation areas. The zoom liquid lens has a plurality of lens areas, and each lens area corresponds to one image generation area. The display method further includes: simultaneously generating images in the plurality of image generation areas, where curvature of light-exiting surfaces of the plurality of lens areas is different, so that a plurality of images generated by the image generation element at a same moment correspond to different focal lengths. The image generation element has a plurality of image generation areas, and may generate a plurality of images at a same moment, and the zoom liquid lens has a plurality of lens areas that are in a one-to-one correspondence with the plurality of image generation areas. Curvature of light-exiting surfaces of the plurality of lens areas is different. In this way, a plurality of images generated at a same moment may correspond to different focal lengths, thereby implementing multi-screen display at a same time.

In a possible implementation of the second aspect, the phase information loaded by the spatial light modulator to the optical waves of the images generated by the image generation element is Fresnel phase information, so as to convert the focal length of the image generation element; and a radius $r_m$ of an $m^{th}$ ring of a Fresnel phase is $r_m = \sqrt{2mf\lambda}$, where $\lambda$ is a wavelength of the optical wave of the image generated by the image generation element, and $f$ is a focal length of a Fresnel lens equivalent to the Fresnel phase.

According to a third aspect, this application further provides a display system, including: a reflector and the head-up display apparatus in the first aspect or any implementation of the first aspect, where the reflector is located on an imaging optical path of an optical imaging unit.

According to the display system provided in this application, the head-up display apparatus uses the head-up display apparatus in any one of the implementations of the first aspect. Therefore, the display system provided in this embodiment of this application can form images with different imaging distances, so as to form multi-screen display. The head-up display apparatus is a single optical machine structure (one multi-focus image generation unit), and has a simple structure. Further, the display system can resolve a same technical problem and achieve a same expected effect as the head-up display apparatus in the foregoing technical solution.

In a possible implementation of the third aspect, the head-up display apparatus is installed in a cab, and the reflector is a windshield installed in the cab.

**BRIEF DESCRIPTION OF DRAWINGS**

FIG. 1 is a schematic diagram of a structure of a head-up display apparatus in the conventional technology;

FIG. 2 is a schematic diagram of a structure of a head-up display apparatus applied in a cab according to an embodiment of this application;

FIG. 3 is a schematic diagram of a structure of a head-up display apparatus according to an embodiment of this application;

FIG. 4 is a block diagram of a structure of a head-up display apparatus according to an embodiment of this application;

FIG. 5 is a schematic diagram of a principle of changing a focal length of a multi-focus image generation unit by a spatial light modulator according to an embodiment of this application;

FIG. 6a is a schematic diagram of a principle of changing a focal length of a multi-focus image generation unit by a zoom liquid lens according to an embodiment of this application;

FIG. 6b is a schematic diagram of a structure of a zoom liquid lens according to an embodiment of this application;

FIG. 7 is a schematic diagram of a principle of changing a focal length of a multi-focus image generation unit by a fixed-focus lens according to an embodiment of this application;

FIG. 8 is a schematic diagram of a structure of dividing a pyramid image into a plurality of parts according to an embodiment of this application;

FIG. 9 is a schematic diagram of a structure of a plurality of light diffuser screens in a head-up display apparatus according to an embodiment of this application;

FIG. 10 is a schematic diagram of a structure of a head-up display apparatus according to an embodiment of this application;

FIG. 11 is a schematic diagram of a structure of a plurality of image generation areas in an image generation element according to an embodiment of this application;

FIG. 12 is a schematic diagram of a principle of changing a focal length of a multi-focus image generation unit by a spatial light modulator according to an embodiment of this application;

FIG. 13 is a schematic diagram of a principle of changing a focal length of a multi-focus image generation unit by a zoom liquid lens according to an embodiment of this application;

FIG. 14 is a schematic diagram of a principle of changing a focal length of a multi-focus image generation unit by a spatial light modulator according to an embodiment of this application;

FIG. 15 is a schematic diagram of a principle of changing a focal length of a multi-focus image generation unit by a zoom liquid lens according to an embodiment of this application;

FIG. 16 is a schematic diagram of a structure of a light diffuser screen according to an embodiment of this application;

FIG. 17 is a schematic diagram of a structure of a light diffuser screen according to an embodiment of this application; and

FIG. 18 is a flow block diagram of a display method for a head-up display apparatus according to an embodiment of this application.

Reference numerals:
01 - first projection module; 02 - second projection module; 03 - penetrating diffusion plate; 04 - polarizing beam splitter; 05 - free form mirror; 06 - extinction mechanism; A1 - far distance image; A2 - near distance image; 1 - multi-focus image generation unit; 101 - image generation element; 102 - focal length conversion element; 1021 - spatial light modulator; 1021A - first modulation area; 1021B - second modulation area; 1022 - zoom liquid lens; 1022A - first lens area; 1022B - second lens area; 1023 - fixed-focus lens; 2 - light diffuser screen; 21 - nano scattering coating; 22 - liquid crystal molecular cooling coating; 201 - first light diffuser screen; 202 - second light diffuser screen; 3 - optical imaging unit; 4 - time sequence control unit; 5 - windshield; 61 - first image; 62 - second image; 7 - light-exiting surface; 8 - permanent magnet; 9 - coil; 10 - drive cavity; 11 - optical cavity.

**DESCRIPTION OF EMBODIMENTS**

Embodiments of this application relate to a head-up display apparatus, a display method, and a display system. The following describes in detail the head-up display apparatus, the display method, and the display system with reference to the accompanying drawings.

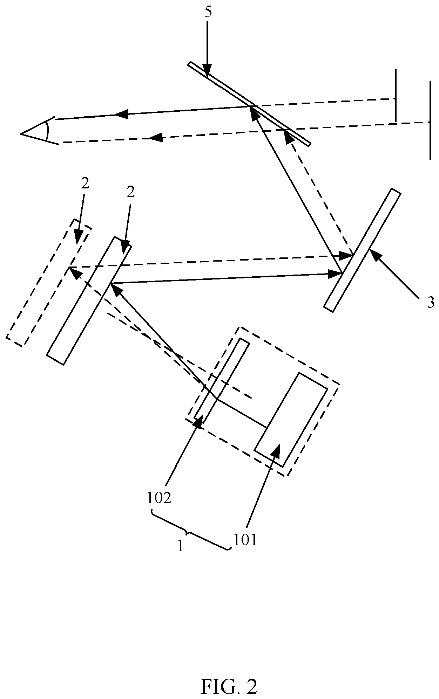

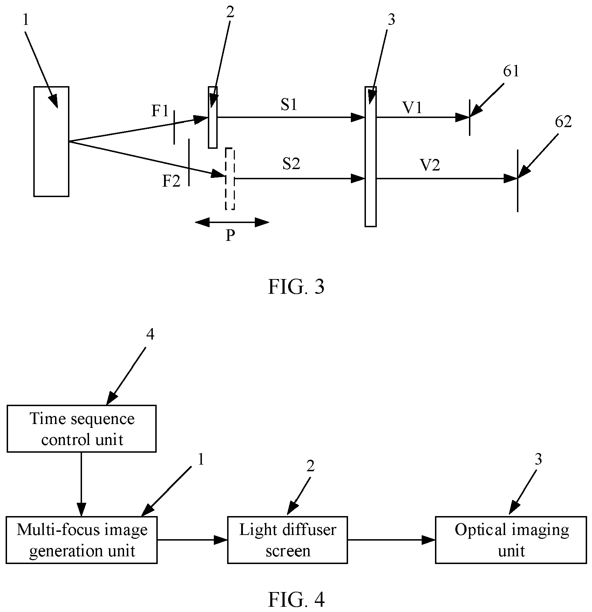

According to one aspect, an embodiment of this application provides a head-up display apparatus that can implement multi-screen display and has a simple structure. Referring to FIG. 2 and FIG. 3, the head-up display apparatus includes a multi-focus image generation unit 1, a light diffuser screen 2, and an optical imaging unit 3. The multi-focus image generation unit 1 has a plurality of different focal lengths and is configured to generate a plurality of images, and focal planes of the plurality of images are located in different positions (the multi-focus image generation unit 1 shown in FIG. 3 has a first focal plane F1 and a second focal plane F2). The light diffuser screen 2 is disposed on an image plane of the multi-focus image generation unit 1, and is configured to receive the plurality of images generated by the multi-focus image generation unit 1, and diffuse light beams of the plurality of images. The optical imaging unit 3 is configured to image a plurality of images projected to the light diffuser screen 2 to form a plurality of images with different imaging distances (FIG. 3 shows forming of a first image 61 with a first imaging distance V1 and a second image 62 with a second imaging distance V2). A focal plane is a plane that is perpendicular to an optical axis of the multi-focus image generation unit and includes a focal point. An image plane is an imaging plane of an image generated by the multi-focus image generation unit, and the focal plane and the image plane may be located in different spatial positions, or may be located in a same spatial position.

The head-up display apparatus uses the multi-focus image generation unit with a plurality of different focal lengths, and the multi-focus image generation unit can generate a plurality of images. Focal planes of the plurality of images are located in different positions. In this way, image planes of the plurality of images are also located in different positions, so that light diffuser screens that receive the images generated by the multi-focus image generation unit and amplify the received images have different distances from the optical imaging unit.

$$\frac{1}{f} = \frac{1}{S} + \frac{1}{V}$$

Referring to FIG. 3, according to a formula , $f$ is a focal length of the optical imaging unit 3, $S$ is a distance between an optical center of the optical imaging unit 3 and a center of the light diffuser screen 2, and V is an imaging distance of the optical imaging unit 3. According to the formula, when a relative distance between the light diffuser screen and the optical imaging unit is different, an imaging distance of the optical imaging unit is different. Therefore, the multi-focus image generation unit with a plurality of different focal lengths can be used to implement multi-screen display.

Because there is one multi-focus image generation unit 1 provided in this embodiment of this application, multi-screen display is implemented by changing a focal length. Compared with a structure shown in FIG. 1 in the conventional technology, a structure of an entire head-up display apparatus is simplified. Correspondingly, a volume of the head-up display apparatus is also smaller, and a miniaturization design requirement is met.

The following describes specific implementations of implementing multi-screen display.

**Implementation 1**

Referring to FIG. 4, the head-up display apparatus further includes a time sequence control unit 4. The multi-focus image generation unit generates one image at a time, and one image corresponds to one focal length. The time sequence control unit 4 is configured to control a moment at which one of the plurality of images generated by the multi-focus image generation unit 1 is switched to and a moment at which one of the plurality of focal lengths is switched to, so that the moment at which one of the plurality of images is switched to and the moment at which one of the focal lengths is switched to are equal, and are less than or equal to reaction time of a human eye.

For example, at a first moment, the multi-focus image generation unit generates a first image, and the first image corresponds to a first focal length. At a second moment, the multi-focus image generation unit generates a second image, and the second image corresponds to a second focal length. The time sequence control unit controls moments at which the first image and the second image are switched to, and moments at which the first focal length and the second focal length are switched to. Both the moment at which one of the images is switched to and the moment at which one of the focal lengths is switched to are less than or equal to the reaction time of the human eye. That is, the moment at which one of the images is switched to and the moment at which one of the focal lengths is switched to are very short, and cannot be identified by the human eye. In this way, it is felt that dual-screen display is formed at a same time.

It should be noted that, according to ergonomics, the reaction time of the human eye is about 0.2 seconds to 0.25 seconds.

**Implementation 2**

The multi-focus image generation unit simultaneously generates a plurality of images, and has a plurality of different focal lengths at a same time. The plurality of images correspond to different focal lengths. In this way, multi-screen display is formed at a same moment.

For example, at a moment, the multi-focus image generation unit simultaneously generates a first image and a second image, the first image corresponds to a first focal length, the second image corresponds to a second focal length, and double-screen display is seen by the human eye at this moment.

**Implementation 3**

The head-up display apparatus further includes a time sequence control unit 4. The multi-focus image generation unit simultaneously generates a plurality of images, has a plurality of different focal lengths at a same time, and the plurality of images correspond to different focal lengths. The time sequence control unit 4 is configured to control a moment at which one of the plurality of images generated by the multi-focus image generation unit 1 is switched to and a moment at which one of the plurality of focal lengths is switched to, so that the moment at which one of the images is switched to and the moment at which one of the focal lengths is switched to are equal, and are less than or equal to reaction time of a human eye.

For example, at a first moment, the multi-focus image generation unit simultaneously generates a first image and a second image, the first image corresponds to a first focal length, and the second image corresponds to a second focal length. At a second moment, the multi-focus image generation unit simultaneously generates a third image and a fourth image, the third image corresponds to a third focal length, and the fourth image corresponds to a fourth focal length. The time sequence control unit controls moments at which the first image and the third image are switched to, and moments at which the first focal length and the third focal length are switched to, and controls moments at which the second image and the fourth image are switched to, and moments at which the second focal length and the fourth focal length are switched to. Both the moment at which one of the images is switched to and the moment at which one of the focal lengths is switched to are less than or equal to the reaction time of the human eye. That is, the moment at which one of the images is switched to and the moment at which one of the focal lengths is switched to are very short, and cannot be identified by the human eye. In this way, it is felt that four-screen display is formed at a same time.

To clearly describe the three implementations, the following first describes implementation 1 in detail, then describes implementation 2 in detail, and finally describes implementation 3 in detail.

Related solutions of implementation 1

Referring to FIG. 3, when the focal length of the multi-focus image generation unit 1 is F1, after a first image generated by the multi-focus image generation unit 1 passes through the light diffuser screen 2 and the optical imaging unit 3, a first image 61 with an imaging distance V1 is formed. When the focal length of the multi-focus image generation unit 1 is F2, after a second image generated by the multi-focus image generation unit 1 passes through the light diffuser screen 2 and the optical imaging unit 3, a second image 62 with an imaging distance V2 is formed, and double-screen display is shown in the figure. By analogy, when there are N focal lengths of the multi-focus image generation unit (N is an integer greater than 2), corresponding N-screen display is formed. During specific implementation, if the first image is navigation image information, the first imaging displays corresponding guidance image information; and if the second image is instrument image information, the second imaging displays corresponding instrument image information. Time for switching the first image to the second image and time for switching the focal length F1 to the focal length F2 are less than or equal to the reaction time of the human eye. Therefore, the guidance image information and the instrument image information are simultaneously displayed to the human eye.

Referring to FIG. 2, the multi-focus image generation unit 1 includes an image generation element 101 and a focal length conversion element 102. The image generation element 101 is configured to generate a plurality of images, and the time sequence control unit 4 is configured to control a moment at which one of the plurality of images generated by the image generation element 101 is switched to. The time sequence control unit 4 is configured to control the focal length conversion element 102 to convert a focal length of the image generation element 101, so that the multi-focus image generation unit has a plurality of different focal lengths.

A structure of the focal length conversion element 102 has a plurality of cases, which are explained and described in the following by using three embodiments.

## Embodiment 1

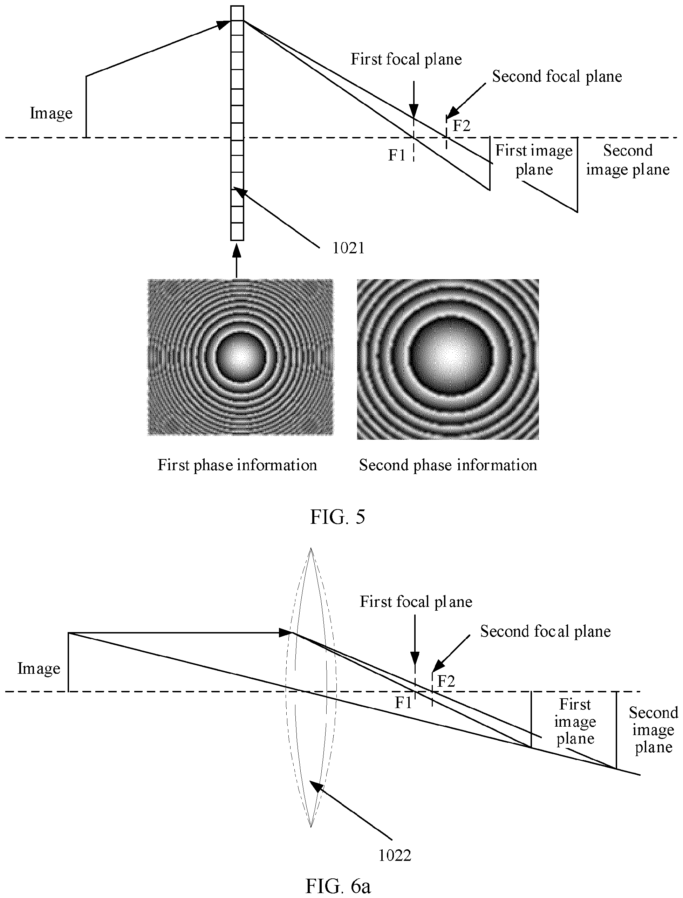

Referring to FIG. 5, the focal length conversion element includes a spatial light modulator 1021. The spatial light modulator 1021 is disposed on an optical path between the image generation element and the light diffuser screen. The spatial light modulator 1021 loads different phase information at different moments to optical waves of the images generated by the image generation element 101, so that a plurality of images generated by the image generation element 101 at different moments correspond to different focal lengths. The time sequence control unit is configured to control a moment at which the phase information is switched to, and the moment at which the phase information is switched to is equal to the moment at which one of the images is switched to.

As shown in FIG. 5, at a first moment, when phase information loaded by the spatial light modulator 1021 to an optical wave of an image generated by the image generation element is first phase information, and a focal length of the image generated by the image generation element is F1, the image is imaged on a first image plane. At a second moment, when phase information loaded by the spatial light modulator to an optical wave of an image generated by the image generation element is second phase information, and a focal length of the image generated by the image generation element is F2, the image is imaged on a second image plane. A time difference between the first moment and the second moment is less than or equal to the reaction time of the human eye (that is, moments at which the first phase information and the second phase information are switched to, and moments at which the first image and the second image are switched to are less than or equal to the reaction time of the human eye). In this way, double-screen display is seen by the human eye. It can be learned from the figure that, when the first phase information and the second phase information loaded by the spatial light modulator to the optical waves of the images generated by the image generation element are different, a focal length size, a focal plane position, and an image plane position are changed.

The spatial light modulator may be a spatial light modulator based on a microlens array, or may be a liquid crystal spatial light modulator. For example, a liquid crystal on silicon (Liquid crystal on silicon, LCoS) spatial light modulator implements modulation of each pixel by changing a voltage value of the pixel, so as to modulate an optical wave of the image generation element, and change a focal length of the image generation element.

A moment at which the phase information is switched to and loaded by the spatial light modulator to the optical waves of the images generated by the image generation element is less than or equal to the reaction time of the human eye, so that it is felt that there is multiscreen display at a same time.

**Embodiment 2**

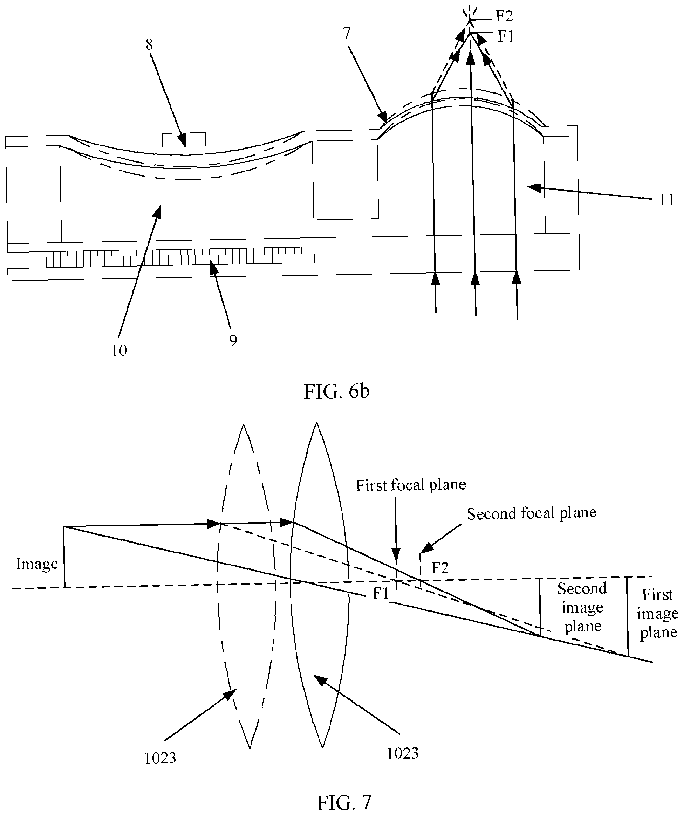

Referring to FIG. 6a and FIG. 6b, the focal length conversion element includes a zoom liquid lens 1022. The zoom liquid lens 1022 is disposed on an optical path between the image generation element and the light diffuser screen. Curvature of a light-exiting surface of the zoom liquid lens at different moments is different, so that a plurality of images generated by the image generation element at different moments correspond to different focal lengths. The time sequence control unit is configured to control a moment at which the curvature is switched to, and the moment at which the curvature is switched to is equal to the moment at which one of the images is switched to.

FIG. 6b is a schematic diagram of a structure of the zoom liquid lens. A drive cavity 10 communicates with an optical cavity 11, that is, liquid in the drive cavity 10 and liquid in the optical cavity 11 can flow between the two cavities. When the liquid in the optical cavity 11 changes, surface tension of a light-exiting surface 7 changes, so that curvature of the light-exiting surface 7 changes. A permanent magnet 8 and a coil 9 form a power source, configured to drive flowing between the liquid in the optical cavity 11 and the liquid in the drive cavity 10.

As shown in FIG. 6b, at a first moment, after the coil 9 is connected to a first current, a magnetic field generated by the coil 9 is different from a magnetic field generated by the permanent magnet 8, and the permanent magnet 8 is attracted to move downward, so that a volume of the drive cavity 10 is reduced, and the liquid in the drive cavity 10 flows to the optical cavity 11, causing deformation of the light-exiting surface 7 to form first curvature (shown by a solid line), so that a focal length of the zoom liquid lens is F1. At a second moment, after the coil 9 is connected to a second current, a magnetic field generated by the coil 9 is different from a magnetic field generated by the permanent magnet 8, and the permanent magnet 8 is attracted to move downward, so that a volume of the drive cavity 10 is reduced, and the liquid in the drive cavity 10 flows to the optical cavity 11, causing deformation of the light-exiting surface 7 to form second curvature (shown by a dashed line), so that a focal length of the zoom liquid lens is F2. A value of the second current is greater than a value of the first current. A time difference between the first moment and the second moment is less than or equal to the reaction time of the human eye (that is, moments at which the first curvature and the second curvature are switched to, and moments at which the first image and the second image are switched to are less than or equal to the reaction time of the human eye). In this way, double-screen display is seen by the human eye. It can be learned from the figure that, when the curvature of the light-exiting surface of the zoom liquid lens is different, a focal length size, a focal plane position, and an image plane position are changed.

**Embodiment 3**

Referring to FIG. 7, the focal length conversion element includes a fixed-focus lens 1023 and a first driving unit (not shown in the figure). The fixed-focus lens is disposed on an optical path between the image generation element and the light diffuser screen. The first driving unit is connected to the fixed-focus lens, and the time sequence control unit is configured to control the first driving unit to move the fixed-focus lens to different positions at different moments, so that a plurality of images generated by the image generation element at different moments correspond to different focal lengths.

As shown in FIG. 7, at a first moment, when the first driving unit drives the fixed-focus lens to move to a first position (shown by a dashed line), a focal length of a first image generated by the image generation element is F1, and imaging of the first image is performed on a first image plane. At a second moment, when the first driving unit drives the fixed-focus lens to move to a second position (shown by a solid line), a focal length of a second image generated by the image generation element is F2, and imaging of the second image is performed on a second image plane. A time difference between the first moment and the second moment is less than or equal to the reaction time of the human eye (moments at which the first position and the second position are switched to, and moments at which the first image and the second image are switched to are less than or equal to the reaction time of the human eye). In this way, double-screen display is seen by the human eye. It can be learned from the figure that, when the fixed-focus lens moves to different positions, a focal length size, a focal plane position, and an image plane position of the multi-focus image generation unit are changed.

The first driving unit in embodiment 3 has a plurality of structures. For example, the first driving unit includes a driving motor, and the driving motor is connected to the fixed-focus lens to drive the fixed-focus lens to move. For another example, the first driving unit includes a telescopic cylinder, and the telescopic cylinder is connected to the fixed-focus lens to drive the fixed-focus lens to move. Any structure that can drive the fixed-focus lens to move falls within the protection scope of this application.

The fixed-focus lens may be disposed on a mobile station, and the first driving unit is connected to the mobile station to drive the mobile station to move, so as to drive the fixed-focus lens to move. The fixed-focus lens is generally made of a glass material, and the first driving unit is directly connected to the fixed-focus lens, which requires a relatively high connection structure. Therefore, the fixed-focus lens is installed on the mobile station.

The foregoing three embodiments are only used as some implementations of the focal length conversion element, and the focal length of the image generation element may be changed in another implementation.

Because the focal length of the multi-focus image generation unit is constantly converted, an image plane position of an image generated by the multi-focus image generation unit is also constantly changing, and the light diffuser screen 2 needs to be able to receive imaging of the multi-focus image generation unit in real time. The light diffuser screen 2 has the following two implementation structures.

**Embodiment 1**

Referring to FIG. 2 and FIG. 3, the head-up display apparatus further includes a second driving unit (not shown in the figure), the second driving unit is connected to the light diffuser screen, and the second driving unit controls the light diffuser screen to move to an image plane of an image generated by the multi-focus image generation unit. In FIG. 3, a solid line indicates that the light diffuser screen is located on a first image plane when the multi-focus image generation unit has a first focal length F1. In FIG. 3, a dashed line indicates that the light diffuser screen is located on a second image plane when the multi-focus image generation unit has a second focal length F2.

That is, the second driving unit drives the light diffuser screen to move along an imaging optical path of the multi-focus image generation unit (in a P direction in FIG. 3), so as to receive imaging of the multi-focus image generation unit at different moments.

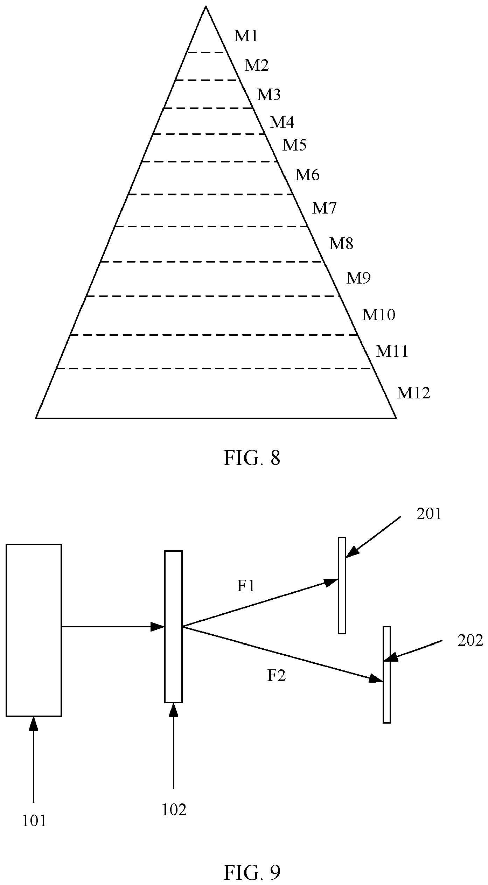

In addition, the second driving unit can drive the light diffuser screen to move continuously along the imaging optical path of the multi-focus image generation unit. In this design, the following technical effect can be further achieved: Referring to FIG. 8, if a pyramid needs to be imaged, a pyramid image is divided into a plurality of parts (12 parts are displayed in the figure). The multi-focus image generation unit displays one part of the image at a time, the part continuously switches from the top to the bottom of the pyramid, and focal lengths of each two parts of the image are continuously changed. The second driving unit drives the light diffuser screen to move continuously, so that a final pyramid image seen by the human eye appears in a three-dimensional structure, which has depth information and improves user experience.

**Embodiment 2**

Referring to FIG. 9, there are a plurality of light diffuser screens, each light diffuser screen corresponds to one image plane of images generated by the multi-focus image generation unit, and different light diffuser screens are located on different image planes.

That is, there are a plurality of light diffuser screens, each light diffuser screen is fixed, and each light diffuser screen is disposed on a corresponding image plane. For example, the head-up display apparatus shown in FIG. 9 includes a first light diffuser screen 201 and a second light diffuser screen 202. The first light diffuser screen 201 is disposed in an image plane position in which a focal length of the multi-focus image generation unit is F1, and the second light diffuser screen 202 is disposed in an image plane position in which a focal length of the multi-focus image generation unit is F2.

A movable light diffuser screen structure shown in FIG. 3 has a simpler structure and occupies less space than a plurality of fixed light diffuser screen structures shown in FIG. 9. Therefore, this application is preferably implemented by using the second driving unit to drive the light diffuser screen to move.

Related solutions of implementation 2

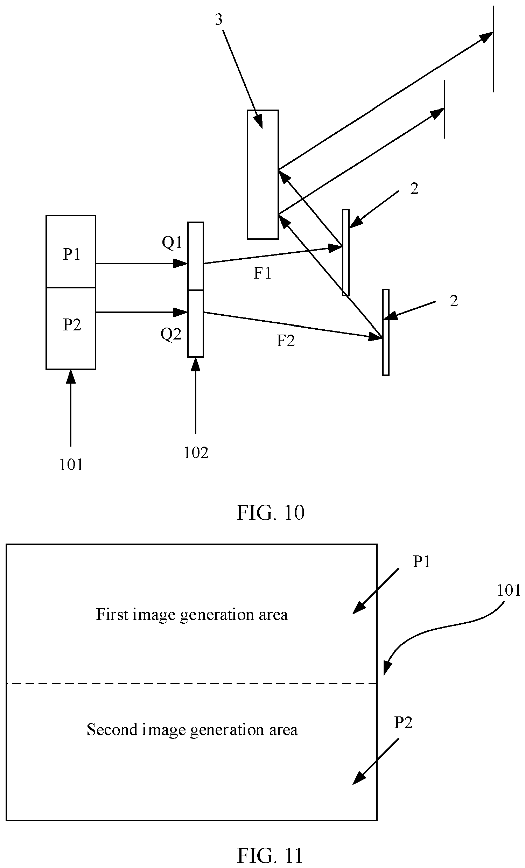

Referring to FIG. 10, the multi-focus image generation unit 1 includes an image generation element 101 and a focal length conversion element 102, and the image generation element 101 has a plurality of image generation areas (FIG. 10 and FIG. 11 show a first image generation area P1 and a second image generation area P2). The focal length conversion element 102 is configured to simultaneously change focal lengths of the plurality of image generation areas, so that the plurality of image generation areas have different focal lengths.

A structure of the focal length conversion element 102 has a plurality of cases, which are explained and described in the following by using two embodiments.

**Embodiment 1**

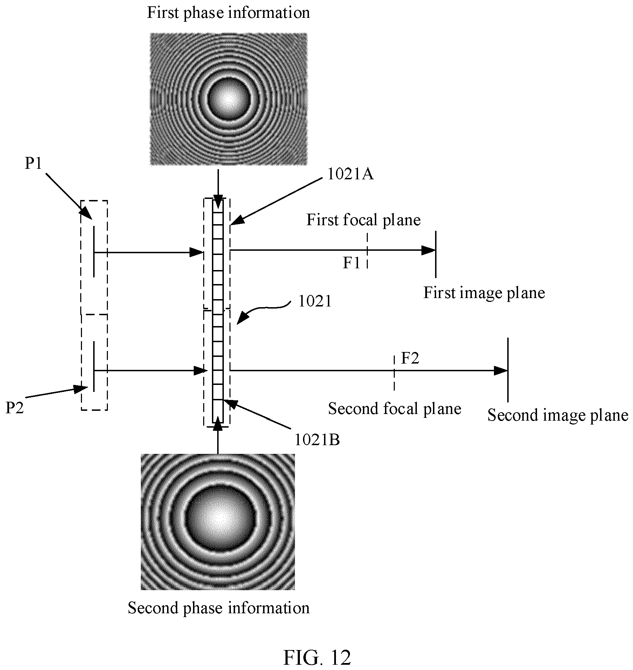

Referring to FIG. 12, the focal length conversion element 102 includes a spatial light modulator 1021. The spatial light modulator is disposed on an optical path between the image generation element and the light diffuser screen. The spatial light modulator has a plurality of modulation areas, each modulation area corresponds to one image generation area, and the plurality of modulation areas load different phase information to optical waves of images generated in corresponding image generation areas, so that a plurality of images generated by the image generation element at a same moment correspond to different focal lengths.

As shown in FIG. 12, the spatial light modulator includes a first modulation area 1021A and a second modulation area 1021B, the first modulation area 1021A corresponds to the first image generation area P1, and the second modulation area 1021B corresponds to the second image generation area P2. When phase information loaded by the first modulation area 1021A to an optical wave of a first image generated by the first image generation area P1 is first phase information, a focal length of the first image generated by the first image generation area P1 is F1, and imaging of the first image is performed on a first image plane. At a same moment, when phase information loaded by the second modulation area 1021B to an optical wave of a second image generated by the second image generation area P2 is second phase information, a focal length of the second image generated by the second image generation area P2 is F2, and imaging of the second image is performed on a second image plane. It can be learned from the figure that when the first phase information and the second phase information of the optical waves loaded by the first modulation area 1021A and the second modulation area 1021B to the images generated by the corresponding image generation areas are different, a focal length size, a focal plane position, and an image plane position are changed, thereby implementing multi-screen display at a same time.

## Embodiment 2

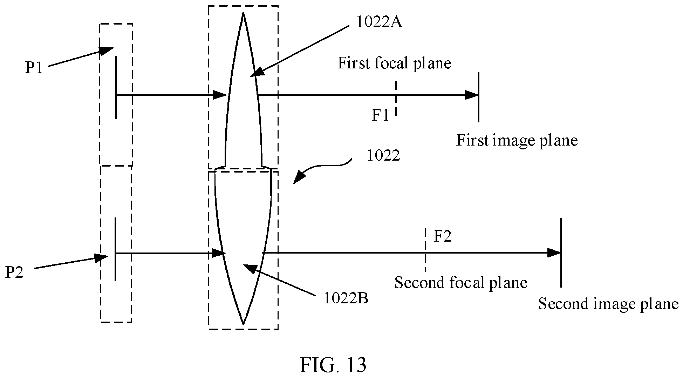

Referring to FIG. 13, the focal length conversion element 102 includes a zoom liquid lens 1022. The zoom liquid lens 1022 is disposed on an optical path between the image generation element and the light diffuser screen. The zoom liquid lens 1022 has a plurality of lens areas, each lens area corresponds to one image generation area, and curvature of light-exiting surfaces of the plurality of lens areas is different, so that a plurality of images generated by the image generation element at a same moment correspond to different focal lengths.

As shown in FIG. 13, the zoom liquid lens 1022 includes a first lens area 1022A and a second lens area 1022B, the first lens area 1022A corresponds to the first image generation area P1, and the second lens area 1022B corresponds to the second image generation area P2. Curvature of a light-exiting surface of the first lens area 1022A is first curvature, and a focal length of a first image generated by the first image generation area P1 is F1, so that imaging of the first image is performed on a first image plane. At a same moment, curvature of a light-exiting surface of the second lens area 1022B is second curvature, and a focal length of a second image generated by the second image generation area P2 is F2, so that imaging of the second image is performed on a second image plane. It can be learned from the figure that, when the curvature of the first lens area 1022A and the second lens area 1022B is different, a focal length size, a focal plane position, and an image plane position are changed, thereby implementing multi-screen display at a same time.

In some implementations, there are a plurality of light diffuser screens, each light diffuser screen corresponds to one image plane of images generated by the multi-focus image generation unit, and different light diffuser screens are located on different image planes.

That is, there are a plurality of light diffuser screens, each light diffuser screen is fixed, and each light diffuser screen is disposed on a corresponding image plane.

Related solutions of implementation 3

The multi-focus image generation unit includes an image generation element and a focal length conversion element, the image generation element has a plurality of image generation areas, and the focal length conversion element is configured to simultaneously modulate focal lengths of the plurality of image generation areas, so that the plurality of image generation areas have different focal lengths. In addition, the head-up display apparatus further includes a time sequence control unit, where the time sequence control unit is configured to control a moment at which one of images generated in the image generation areas is switched to and a moment at which one of the focal lengths is switched to, so that the moment at which one of the plurality of images is switched to and the moment at which one of the focal lengths is switched to are equal, and are less than or equal to the reaction time of the human eye.

A structure of the focal length conversion element 102 has a plurality of cases, which are explained and described in the following by using two embodiments.

## Embodiment 1

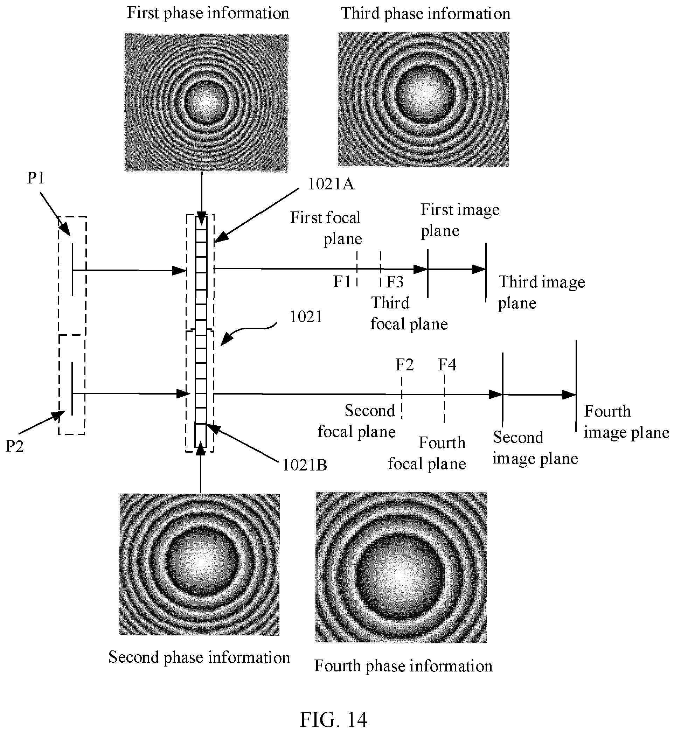

Referring to FIG. 14, the focal length conversion element includes a spatial light modulator 1021. The spatial light modulator is disposed on an optical path between the image generation element and the light diffuser screen. The spatial light modulator has a plurality of modulation areas, each modulation area corresponds to one image generation area, and the plurality of modulation areas load different phase information to optical waves of images generated in corresponding image generation areas, so that a plurality of images generated by the image generation element at a same moment correspond to different focal lengths. In addition, the time sequence control unit controls the image generation areas and loads different phase information at different moments to optical waves of images generated by the image generation areas, so that a plurality of images generated by the image generation areas at different moments correspond to different focal lengths.

As shown in FIG. 14, the spatial light modulator includes a first modulation area 1021A and a second modulation area 1021B, the first modulation area 1021A corresponds to a first image generation area P1, and the second modulation area 1021B corresponds to a second image generation area P2. At a first moment, when phase information loaded by the first modulation area 1021A to an optical wave of a first image generated by the first image generation area P1 is first phase information, a focal length of the first image generated by the first image generation area P1 is F1, and imaging of the first image is performed on a first image plane. At the first moment, when phase information loaded by the second modulation area 1021B to an optical wave of a second image generated by the second image generation area P2 is second phase information, a focal length of the second image generated by the second image generation area P2 is F2, and imaging of the second image is performed on a second image plane. At a second moment, when phase information loaded by the first modulation area 1021A to an optical wave of a third image generated by the first image generation area P1 is third phase information, a focal length of the third image generated by the first image generation area P1 is F3, and imaging of the third image is performed on a third image plane. At the second moment, when phase information loaded by the second modulation area 1021B to an optical wave of a fourth image generated by the second image generation area P2 is fourth phase information, a focal length of the fourth image generated by the second image generation area P2 is F2, and imaging of the fourth image is performed on a fourth image plane. A time difference between the first moment and the second moment is less than or equal to the reaction time of the human eye (moments at which the first phase information and the third phase information are switched to, moments at which the second phase information and the fourth phase information are switched to, and moments at which the first image and the second image are switched to are less than or equal to the reaction time of the human eye). In this way, four-screen display is seen by the human eye.

**Embodiment 2**

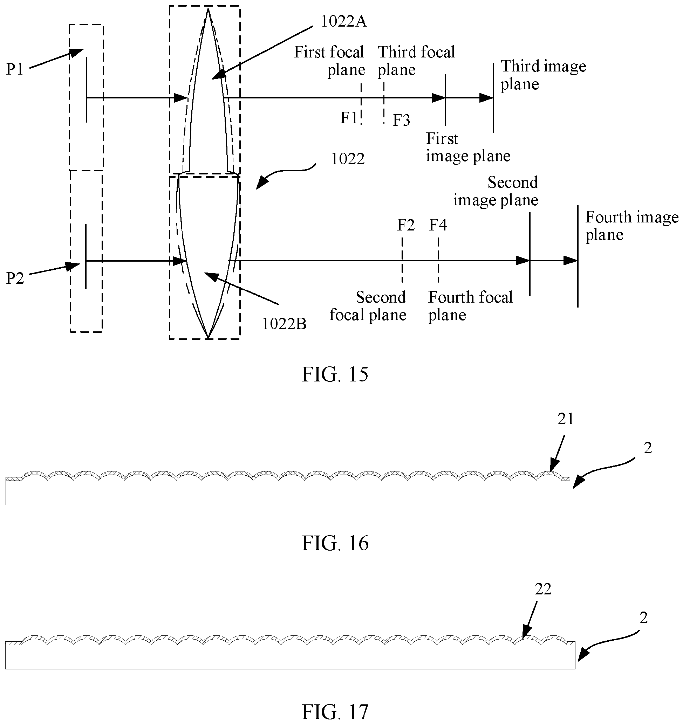

Referring to FIG. 15, the focal length conversion element 102 includes a zoom liquid lens 1022. The zoom liquid lens 1022 is disposed on an optical path between the image generation element and the light diffuser screen. The zoom liquid lens 1022 has a plurality of lens areas, each lens area corresponds to one image generation area, and curvature of light-exiting surfaces of the plurality of lens areas is different, so that a plurality of images generated by the image generation element at a same moment correspond to different focal lengths. In addition, the time sequence control unit controls the image generation areas. The curvature of the light-exiting surfaces of the plurality of lens areas at different moments is different, so that a plurality of images generated by the image generation areas at different moments correspond to different focal lengths.

As shown in FIG. 15, the zoom liquid lens 1022 includes a first lens area 1022A and a second lens area 1022B, the first lens area 1022A corresponds to a first image generation area P1, and the second lens area 1022B corresponds to a second image generation area P2. At a first moment, curvature of a light-exiting surface of the first lens area 1022A is first curvature, and a focal length of a first image generated by the first image generation area P1 is F1, so that imaging of the first image is performed on a first image plane. At the first moment, curvature of a light-exiting surface of the second lens area 1022B is second curvature, and a focal length of a second image generated by the second image generation area P2 is F2, so that imaging of the second image is performed on a second image plane. At a second moment, curvature of a light-exiting surface of the first lens area 1022A is third curvature, and a focal length of a third image generated by the first image generation area P1 is F3, so that imaging of the third image is performed on a third image plane. At the second moment, curvature of a light-exiting surface of the second lens area 1022B is fourth curvature, and a focal length of a fourth image generated by the second image generation area P2 is F2, so that imaging of the fourth image is performed on a fourth image plane. A time difference between the first moment and the second moment is less than or equal to the reaction time of the human eye (moments at which the first curvature and the third curvature are switched to, moments at which the second curvature and the fourth curvature are switched to, and moments at which the first image and the second image are switched to are less than or equal to the reaction time of the human eye). In this way, four-screen display is seen by the human eye.

In some implementations, there are a plurality of light diffuser screens, each light diffuser screen is connected to a second driving unit, and the second driving unit controls the light diffuser screen to move to an image plane of an image generated by the multi-focus image generation unit.

For example, a structure shown in FIG. 14 may include two light diffuser screens, which are respectively a first light diffuser screen and a second light diffuser screen, and there are two second driving units, which are respectively a second driving unit A and a second driving unit B. The second driving unit A may drive the first light diffuser screen to move between the first image plane and the third image plane, and the second driving unit B may drive the second diffuser screen to move between the second image plane and the fourth image plane.

The foregoing describes a specific structure that may be implemented for the second driving unit, and details are not described herein again.

In the foregoing implementation 1, implementation 2, and implementation 3, the light diffuser screen is used to implement diffuse reflection by using a concave-convex structure disposed on a scattering surface, to implement an expanded image. However, roughness of a scattering surface of an existing light diffuser screen is large, and is basically at a scale of dozens of microns. Therefore, an image formed in this way has a blurred edge and obvious granular sensation, and high-definition display cannot be implemented.

To improve visual experience, for example, referring to FIG. 16, a nano scattering coating 21 is formed on a scattering surface of the light diffuser screen 2 provided in this embodiment of this application, and a size of nano-particles of the nano scattering coating 21 is approximately close to a micron scale, to reduce surface roughness of the light diffuser screen. For another example, referring to FIG. 17, a liquid crystal molecular cooling coating 22 is formed on the scattering surface of the light diffuser screen 2. The liquid crystal molecular cooling coating is formed on the scattering surface of the light diffuser screen, to reduce roughness of the scattering surface of the light diffuser screen, so that an image magnified by the optical imaging unit does not have a blurred edge, obvious noise, and granular sensation. For another example, the light diffuser screen is made of glass ceramics. Diffusion is implemented by using a microcrystalline molecule in the glass ceramics. The microcrystalline molecule is at a nanometer scale, and after being magnified by the optical imaging unit, an image has no obvious noise and granular sensation, thereby forming high-definition display.

The optical imaging unit 3 has a plurality of implementable structures. For example, the optical imaging unit 3 includes an aspherical reflector. For another example, the optical imaging unit 3 includes an aspherical reflector and a convex mirror that are stacked. For another example, the optical imaging unit 3 includes an aspherical reflector and a concave mirror that are stacked. Certainly, the optical imaging unit 3 may alternatively include another optical element. A specific structure of the optical imaging unit is not limited in this application, and any structure falls within the protection scope of this application.

According to another aspect, an embodiment of this application further provides a display system, where the display system includes a reflector and the head-up display apparatus provided in the foregoing embodiments, and the reflector is located on an imaging optical path of an optical imaging unit. That is, an image formed by an optical imaging element of the head-up display apparatus may be reflected into a human eye by using the reflector.

It should be noted that the display system may be installed in a driving device, or the display system may be installed in a teaching device.

When the display system is installed in the driving device, a windshield can be used as the reflector, or the reflector can be disposed alone. This application preferably uses the windshield as the reflector.

The head-up display apparatus provided in the foregoing embodiments is used in the display system, and an image generation unit in the head-up display apparatus is a multi-focus image generation unit, that is, has a plurality of different focal lengths, and can generate a plurality of images. In this way, multi-screen display can be implemented, and the display system is a single optical machine structure (one multi-focus image generation unit) with a simple structure and a corresponding decreased volume.

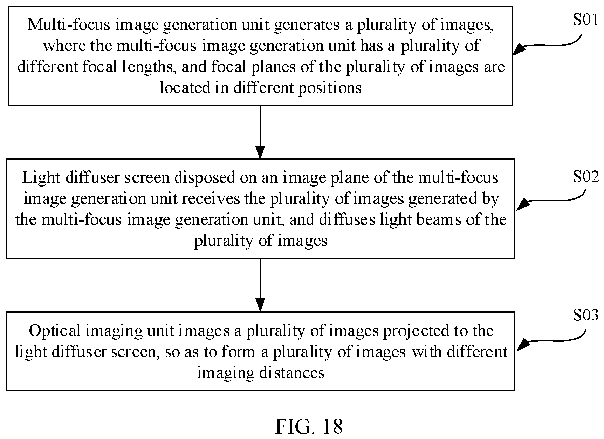

According to still another aspect, an embodiment of this application further provides a display method for a head-up display apparatus. Referring to FIG. 18, the display method includes:

> S01. A multi-focus image generation unit generates a plurality of images, where the multi-focus image generation unit has a plurality of different focal lengths, and focal planes of the plurality of images are located in different positions.
> S02. A light diffuser screen disposed on an image plane of the multi-focus image generation unit receives the plurality of images generated by the multi-focus image generation unit, and diffuses light beams of the plurality of images.
> S03. An optical imaging unit images a plurality of images projected to the light diffuser screen to form a plurality of images with different imaging distances.

That is, an image generation unit in the display method is a multi-focus image generation unit, the multi-focus image generation unit can generate a plurality of images, and focal planes of the plurality of images are located in different positions. In this way, a plurality of images with different imaging distances are formed, and multi-screen display is implemented. Compared with an existing technology of implementing multi-screen display by using a plurality of image generation units with different focal lengths, one multi-focus image generation unit replaces the plurality of image generation units with different focal lengths.

The display method may be implemented in the following three implementations to implement multi-screen display at a same time. The following separately describes the three implementations.

First implementation

In this implementation, the head-up display apparatus further includes a time sequence control unit. The display method includes: The time sequence control unit controls a moment at which one of the plurality of images generated by the multi-focus image generation unit is switched to and a moment at which one of the plurality of focal lengths is switched to, so that the moment at which one of the plurality of images is switched to and the moment at which one of the focal lengths is switched to are equal, and are less than or equal to reaction time of a human eye.

The time sequence control unit controls the moment at which one of the images is switched to and the moment at which one of the focal lengths is switched to, so that the moment at which one of the images is switched to and the moment at which one of the focal lengths is switched to are less than or equal to the reaction time of the human eye. That is, the moment at which one of the images is switched to and the moment at which one of the focal lengths is switched to are very short, and cannot be identified by the human eye. In this way, the human eye feels that there is multi-screen display at a same time.

In some embodiments, the multi-focus image generation unit includes an image generation element and a spatial light modulator. In some other embodiments, a focal image generation unit includes an image generation element and a zoom liquid lens. In some other embodiments, the multi-focus image generation unit includes an image generation element, a fixed-focus lens, and a first driving unit. The image generation element can generate a plurality of images. The time sequence control unit controls a moment at which one of the plurality of images generated by the image generation element is switched to, and the moment at which one of the images of the image generation element is switched to is less than or equal to the reaction time of the human eye. The spatial light modulator, the zoom liquid lens, the fixed-focus lens, and the first driving unit are configured to change a focal length of the image generation element.

When the multi-focus image generation unit includes an image generation element and a spatial light modulator, the display method includes: The spatial light modulator loads different phase information at different moments to optical waves of the images generated by the image generation element, so that a plurality of images generated by the image generation element at different moments correspond to different focal lengths. The time sequence control unit controls a moment at which one of the images generated by the image generation element is switched to and a moment at which the phase information is switched to, and the moment at which the phase information is switched to is equal to the moment at which one of the images is switched to. Different phase information is loaded at different moments to the optical waves of the images generated by the image generation element, so as to change the focal length of the image generation element, and finally, the plurality of images generated by the image generation element at different moments correspond to different focal lengths. The moment at which the phase information is switched to is equal to the moment at which one of the images is switched to, and are less than or equal to the reaction time of the human eye. In this way, the human eye feels that there is multi-screen display at a same time.

When the multi-focus image generation unit includes an image generation element and a zoom liquid lens, the display method includes: Curvature of a light-exiting surface of the zoom liquid lens at different moments is different, so that a plurality of images generated by the image generation element at different moments correspond to different focal lengths. The time sequence control unit controls a moment at which one of the images generated by the image generation element is switched to and a moment at which the curvature is switched to, and the moment at which the curvature is switched to is equal to the moment at which one of the images is switched to. The curvature of the light-exiting surface of the zoom liquid lens at different moments is different, which can change the focal length of the image generation element, and finally, the plurality of images generated by the image generation element at different moments correspond to different focal lengths. The moment at which the curvature is switched to is equal to the moment at which one of the images is switched to, and are less than or equal to the reaction time of the human eye. In this way, the human eye feels that there is multi-screen display at a same time.

When the multi-focus image generation unit includes an image generation element, a fixed-focus lens, and a first driving unit connected to the fixed-focus lens, the display method includes: The first driving unit drives the fixed-focus lens to move to different positions at different moments, so that a plurality of images generated by the image generation element at different moments correspond to different focal lengths. The time sequence control unit controls a moment at which one of the images generated by the image generation element is switched to and a moment at which one of the positions is switched to, and the moment at which one of the positions is switched to is equal to the moment at which one of the images is switched to. The first driving unit drives the fixed-focus lens at different moments to move to different positions, to change the focal length of the image generation element, and finally, the plurality of images generated by the image generation element at different moments correspond to different focal lengths. The moment at which one of the positions of the fixed-focus lens is switched to is equal to the moment at which one of the images is switched to, and are less than or equal to the reaction time of the human eye. In this way, the human eye feels that there is multi-screen display at a same time.

In this implementation, the light diffuser screen is connected to a second driving unit. The display method further includes: When a focal length of the multi-focus image generation unit is converted, the second driving unit controls the light diffuser screen to move to an image plane of an image generated by the multi-focus image generation unit.

In a process in which the second driving unit drives the light diffuser screen to move, a position to which the light diffuser screen moves needs to be determined. Therefore, that the second driving unit controls the light diffuser screen to move to an image plane of an image generated by the multi-focus image generation unit includes:

S11. Determine an imaging distance V of the head-up display apparatus based on a focal length of the multi-focus image generation unit, where the imaging distance V is a distance between an image plane of the optical imaging unit and an optical center of the optical imaging unit.

S12. Then calculate a distance $S$ between a center of the light diffuser screen and the optical center of the optical imaging unit according to the following

$$S = \frac{fV}{V - f}$$

formula,      ; where $f$ is a focal length of the optical imaging unit.

S13. The second driving unit drives the light diffuser screen to move to a position in which a distance to the optical center of the optical imaging unit is $S$.

After the optical imaging unit is determined, a distance between the light diffuser screen and the optical imaging unit and an imaging distance of the optical im-

$$\frac{1}{f} = \frac{1}{S} + \frac{1}{V}$$

aging unit meet      . Therefore, the position to which the light diffuser screen moves may be determined according to this formula.

In this implementation, the head-up display apparatus further includes a plurality of light diffuser screens (that is, the second driving unit is not included), and each light diffuser screen corresponds to one image plane of images generated by the multi-focus image generation unit. The display method further includes: projecting images generated by the multi-focus image generation unit at different moments to corresponding light diffuser screens.

Second implementation

In this implementation, the multi-focus image generation unit simultaneously generates a plurality of images and has a plurality of different focal lengths, so as to implement multi-screen display at a same time.

In some embodiments, the multi-focus image generation unit includes an image generation element and a spatial light modulator. In some other embodiments, a focal image generation unit includes an image generation element and a zoom liquid lens. The image generation element has a plurality of image generation areas, and can simultaneously generate a plurality of images.

When the multi-focus image generation unit includes an image generation element and a spatial light modulator, the spatial light modulator has a plurality of modulation areas, and each modulation area corresponds to one image generation area. The display method includes: simultaneously generating images in the plurality of image generation areas, where the plurality of modulation areas load different phase information to optical waves of images generated in corresponding image generation areas, so that a plurality of images generated by the image generation element at a same moment correspond to different focal lengths. Each modulation area loads different phase information at a same moment to an optical wave of an image generated by a corresponding image generation area, so that the plurality of image generation areas have different focal lengths, and multi-screen display is implemented at a same time.

When the multi-focus image generation unit includes an image generation element and a zoom liquid lens, the zoom liquid lens has a plurality of lens areas, and each lens area corresponds to one image generation area. The display method includes: simultaneously generating images in the plurality of image generation areas, where curvature of light-exiting surfaces of the plurality of lens areas is different, so that a plurality of images generated by the image generation element at a same moment correspond to different focal lengths. Curvature of a light-exiting surface of each lens area at a same moment is different, so that the plurality of image generation areas have different focal lengths, and multi-screen display is implemented at a same time.

Because the image generation element has a plurality of image generation areas, the spatial light modulator has a plurality of modulation areas, and the zoom liquid lens has a plurality of lens areas, a plurality of corresponding light diffuser screens are also disposed, and each light diffuser screen corresponds to one image plane of images generated by the multi-focus image generation unit. The display method further includes: projecting images generated by the multi-focus image generation unit at a same moment to corresponding light diffuser screens.

In addition, when the spatial light modulator loads phase information to the optical waves of the images generated by the image generation element, Fresnel phase information may be loaded to convert a focal length of the image generation element.

A radius $r_m$ of an $m^{th}$ ring of a Fresnel phase is

$$r_m = \sqrt{2mf\lambda}$$

; and $\lambda$ is a wavelength of the optical wave of the image generated by the image generation element, and $f$ is a focal length of a Fresnel lens equivalent to the Fresnel phase.

Third implementation

In this implementation, the multi-focus image generation unit simultaneously generates a plurality of images and has a plurality of different focal lengths. The head-up display apparatus further includes a time sequence control unit. The time sequence control unit is configured to control a moment at which one of the plurality of images generated by the multi-focus image generation unit is switched to and a moment at which one of the plurality of focal lengths is switched to, so that the moment at which one of the plurality of images is switched to and the moment at which one of the focal lengths is switched to are equal, and are less than or equal to the reaction time of the human eye, so as to implement multiscreen display at a same time.

In some embodiments, the multi-focus image generation unit includes an image generation element and a spatial light modulator. In some other embodiments, a focal image generation unit includes an image generation element and a zoom liquid lens. The image generation element has a plurality of image generation areas, and can simultaneously generate a plurality of images.

When the multi-focus image generation unit includes an image generation element and a spatial light modulator, the spatial light modulator has a plurality of modulation areas, and each modulation area corresponds to one image generation area. The display method includes: simultaneously generating images in the plurality of image generation areas, where the plurality of modulation areas load different phase information to optical waves of images generated in corresponding image generation areas, so that a plurality of images generated by the image generation element at a same moment correspond to different focal lengths. In addition, the time sequence control unit controls a moment at which one of the images generated by the image generation areas is switched to and a moment at which phase information in the modulation areas is switched to, and the moment at which one of the images is switched to and the moment at which the phase information is switched to are equal, and are less than or equal to the reaction time of the human eye.

When the multi-focus image generation unit includes an image generation element and a zoom liquid lens, the zoom liquid lens has a plurality of lens areas, and each lens area corresponds to one image generation area. The display method includes: simultaneously generating images in the plurality of image generation areas, where curvature of light-exiting surfaces of the plurality of lens areas is different, so that a plurality of images generated by the image generation element at a same moment correspond to different focal lengths. In addition, the time sequence control unit controls a moment at which one of images generated by the image generation areas is switched to and a moment at which curvature of the lens areas is switched to, and the moment at which one of the images is switched to and the moment at which the curvature is switched to are equal, and are less than or equal to the reaction time of the human eye.

In this implementation, there may be a plurality of light diffuser screens, and each light diffuser screen is connected to one second driving unit. A position to which the second driving unit drives the light diffuser screen to move is described above, and details are not described herein again.

In this implementation, the spatial light modulator may load Fresnel phase information to the optical wave of the image generated by the image generation element, so as to convert a focal length of the image generation element.

In the descriptions of this specification, the described specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A head-up display apparatus, comprising:

   a multi-focus image generation unit with a plurality of different focal lengths, configured to generate a plurality of images, wherein focal planes of the plurality of images are located in different positions;
   a light diffuser screen, disposed on an image plane of the multi-focus image generation unit, and configured to receive the plurality of images generated by the multi-focus image generation unit, and diffuse light beams of the plurality of images; and
   an optical imaging unit, configured to image a plurality of images projected to the light diffuser screen, so as to form a plurality of images with different imaging distances.

2. The head-up display apparatus according to claim 1, wherein the head-up display apparatus further comprises:
   a time sequence control unit, configured to control a moment at which one of the plurality of images generated by the multi-focus image generation unit is switched to and a moment at which one of the plurality of focal lengths is switched to, to enable the moment at which one of the images is switched to and the moment at which one of the focal lengths is switched to to be equal, and less than or equal to reaction time of a human eye.

3. The head-up display apparatus according to claim 2, wherein the multi-focus image generation unit comprises:

an image generation element, configured to generate a plurality of images, wherein the time sequence control unit is configured to control a moment at which one of the images generated by the image generation element is switched to; and

a spatial light modulator, disposed on an optical path between the image generation element and the light diffuser screen, wherein the spatial light modulator loads different phase information at different moments to optical waves of the images generated by the image generation element, so that the plurality of images generated by the image generation element at different moments correspond to different focal lengths; and the time sequence control unit is configured to control a moment at which the phase information is switched to, and the moment at which the phase information is switched to is equal to the moment at which one of the images is switched to.

4. The head-up display apparatus according to claim 2, wherein the multi-focus image generation unit comprises:

an image generation element, configured to generate a plurality of images, wherein the time sequence control unit is configured to control a moment at which one of the plurality of images generated by the image generation element is switched to; and

a zoom liquid lens, disposed on an optical path between the image generation element and the light diffuser screen, wherein curvature of a light-exiting surface of the zoom liquid lens at different moments is different, so that the plurality of images generated by the image generation element at different moments correspond to different focal lengths; and the time sequence control unit is configured to control a moment at which the curvature is switched to, and the moment at which the curvature is switched to is equal to the moment at which one of the images is switched to.

5. The head-up display apparatus according to claim 2, wherein the multi-focus image generation unit comprises:

an image generation element, configured to generate a plurality of images, wherein the time sequence control unit is configured to control a moment at which one of the plurality of images generated by the image generation element is switched to;

a fixed-focus lens, disposed on an optical path between the image generation element and the light diffuser screen; and

a first driving unit, connected to the fixed-focus lens, wherein the first driving unit drives the fixed-focus lens to move to different positions at different moments, so that the plurality of images generated by the image generation element at different moments correspond to different focal lengths; and the time sequence control unit is configured to control a moment at which one of the positions is switched to, and the moment at which one of the positions is switched to is equal to the moment at which one of the images is switched to.

6. The head-up display apparatus according to claim 1 or 2, wherein the multi-focus image generation unit comprises:

an image generation element, having a plurality of image generation areas; and

a spatial light modulator, disposed on an optical path between the image generation element and the light diffuser screen, wherein the spatial light modulator has a plurality of modulation areas, each modulation area corresponds to one image generation area, and the plurality of modulation areas load different phase information to optical waves of images generated in corresponding image generation areas, so that a plurality of images generated by the image generation element at a same moment correspond to different focal lengths.

7. The head-up display apparatus according to claim 1 or 2, wherein the multi-focus image generation unit comprises:

an image generation element, having a plurality of image generation areas; and

a zoom liquid lens, disposed on an optical path between the image generation element and the light diffuser screen, wherein the zoom liquid lens has a plurality of lens areas, each lens area corresponds to one image generation area, and curvature of light-exiting surfaces of the plurality of lens areas is different, so that a plurality of images generated by the image generation element at a same moment correspond to different focal lengths.

8. The head-up display apparatus according to any one of claims 1 to 7, further comprising:
a second driving unit, connected to the light diffuser screen, wherein the second driving unit controls the light diffuser screen to move to an image plane of the image generated by the multi-focus image generation unit.

9. The head-up display apparatus according to any one of claims 1 to 8, comprising a plurality of light diffuser screens, each light diffuser screen corresponds to one image plane of the image generated by the multi-focus image generation unit, and different light diffuser screens are located on different image planes.

10. The head-up display apparatus according to any one of claims 1 to 9, wherein a nano scattering coating or a liquid crystal molecular cooling coating is formed on a scattering surface of the light diffuser screen.

11. The head-up display apparatus according to any one of claims 1 to 9, wherein the light diffuser screen is made of glass ceramics.

12. A display method for a head-up display apparatus, comprising:

    generating, by a multi-focus image generation unit, a plurality of images, wherein the multi-focus image generation unit has a plurality of different focal lengths, and focal planes of the plurality of images are located in different positions;
    receiving, by a light diffuser screen disposed on an image plane of the multi-focus image generation unit, the plurality of images generated by the multi-focus image generation unit, and diffusing light beams of the plurality of images; and
    imaging, by an optical imaging unit, a plurality of images projected to the light diffuser screen, so as to form a plurality of images with different imaging distances.

13. The display method according to claim 12, wherein the head-up display apparatus further comprises a time sequence control unit; and the display method further comprises: controlling, by the time sequence control unit, a moment at which one of the plurality of images generated by the multi-focus image generation unit is switched to and a moment at which one of the plurality of focal lengths is switched to, to enable the moment at which one of the plurality of images is switched to and the moment at which one of the focal lengths is switched to to be equal, and less than or equal to reaction time of a human eye.

14. The display method according to claim 13, wherein the multi-focus image generation unit comprises:

    an image generation element, configured to generate a plurality of images; and
    a spatial light modulator; and
    the display method further comprises:
    loading, by the spatial light modulator, different phase information at different moments to optical waves of the images generated by the image generation element, to enable the plurality of images generated by the image generation element at different moments to correspond to different focal lengths; and controlling, by the time sequence control unit, a moment at which one of the images generated by the image generation element is switched to and a moment at which the phase information is switched to, wherein the moment at which the phase information is switched to is equal to the moment at which one of the images is switched to.

15. The display method according to claim 13, wherein the multi-focus image generation unit comprises:

    an image generation element, configured to generate a plurality of images; and
    a zoom liquid lens; and
    the display method further comprises:
    controlling, by the time sequence control unit, a moment at which one of the images generated by the image generation element is switched to and a moment at which the curvature is switched to, wherein the moment at which the curvature is switched to is equal to the moment at which one of the images is switched to, curvature of a light-exiting surface of the zoom liquid lens at different moments is different, so that the plurality of images generated by the image generation element at different moments correspond to different focal lengths.

16. The display method according to claim 13, wherein the multi-focus image generation unit comprises:

    an image generation element, configured to generate a plurality of images;
    a fixed-focus lens; and
    a first driving unit, connected to the fixed-focus lens; and
    the display method further comprises:
    driving, by the first driving unit, the fixed-focus lens to move to different positions at different moments, to enable the plurality of images generated by the image generation element at different moments to correspond to different focal lengths; and controlling, by the time sequence control unit, a moment at which one of the images generated by the image generation element is switched to and a moment at which one of the positions is switched to, wherein the moment at which one of the positions is switched to is equal to the moment at which one of the images is switched to.

17. The display method according to claim 12 or 13, wherein the multi-focus image generation unit comprises:

an image generation element, having a plurality of image generation areas; and
a spatial light modulator, having a plurality of modulation areas, wherein each modulation area corresponds to one image generation area; and
the display method further comprises:
simultaneously generating images in the plurality of image generation areas, wherein the plurality of modulation areas load different phase information to optical waves of images generated in corresponding image generation areas, so that a plurality of images generated by the image generation element at a same moment correspond to different focal lengths.

18. The display method according to claim 12 or 13, wherein the multi-focus image generation unit comprises:

an image generation element, having a plurality of image generation areas; and
a zoom liquid lens, having a plurality of lens areas, wherein each lens area corresponds to one image generation area; and
the display method further comprises:
simultaneously generating images in the plurality of image generation areas, wherein curvature of light-exiting surfaces of the plurality of lens areas is different, so that a plurality of images generated by the image generation element at a same moment correspond to different focal lengths.

19. The display method according to any one of claims 12 to 18, wherein the light diffuser screen is connected to a second driving unit; and
the display method further comprises:
when a focal length of the multi-focus image generation unit is converted, controlling, by the second driving unit, the light diffuser screen to move to an image plane of the image generated by the multi-focus image generation unit.

20. The display method according to claim 19, wherein the controlling, by the second driving unit, the light diffuser screen to move to an image plane of the image generated by the multi-focus image generation unit comprises:

determining an imaging distance V of the head-up display apparatus based on the focal length of the multi-focus image generation unit, wherein the imaging distance V is a distance between an image plane of the optical imaging unit and an optical center of the optical imaging unit, and then a distance S between a center of the light diffuser screen and the optical center of the optical imaging unit is calculated according to the following formula,

$$S = \frac{fV}{V - f},$$

wherein

f is a focal length of the optical imaging unit; and
driving, by the second driving unit, the light diffuser screen to move to a position in which a distance to the optical center of the optical imaging unit is S.

21. The display method according to any one of claims 12 to 19, wherein there are a plurality of light diffuser screens; and
the display method further comprises:
projecting the image generated by the multi-focus image generation unit to a corresponding light diffuser screen.

22. The display method according to claim 14 or 17, wherein the phase information loaded by the spatial light modulator to the optical waves of the images generated by the image generation element is Fresnel phase information, so as to convert the focal length of the image generation element; and
a radius $r_m$ of an $m^{th}$ ring of a Fresnel phase is

$$r_m = \sqrt{2mf\lambda}$$, wherein

$\lambda$ is a wavelength of the optical wave of the image generated by the image generation element, and f is a focal length of a Fresnel lens equivalent to the Fresnel phase.

23. A display system, comprising:

the head-up display apparatus according to any one of claims 1 to 11; and
a reflector, wherein the reflector is located on an imaging optical path of an optical imaging unit.

24. The display system according to claim 23, wherein

the head-up display apparatus is installed in a cab; and
the reflector is a windshield installed in the cab.

FIG. 1

FIG. 2

1 2 3

61

F1

S1 V1

62

F2

S2 V2

P

FIG. 3

4

Time sequence
control unit

1 2 3

Multi-focus image
generation unit

Light diffuser
screen

Optical imaging
unit

FIG. 4

Image

First focal plane

Second focal plane

F2

F1

First image plane

Second image plane

1021

First phase information

Second phase information

FIG. 5

First focal plane

Second focal plane

Image

F2

F1

First image plane

Second image plane

1022

FIG. 6a

FIG. 6b

FIG. 7

FIG. 8

FIG. 9

FIG. 10

FIG. 11

First phase information

P1

1021A

First focal plane

F1

First image plane

1021

F2

Second focal plane

P2

1021B

Second image plane

Second phase information

FIG. 12

FIG. 13

First phase information          Third phase information

P1

1021A

First focal
plane

First image
plane

F1      F3

Third image
plane

1021

Third
focal plane

F2      F4

Second
focal plane

Fourth
image plane

P2

Fourth
focal plane

Second
image plane

1021B

Second phase information      Fourth phase information

FIG. 14

P1

1022A

First focal plane   Third focal plane

Third image plane

F1   F3

First image plane

1022

Second image plane

F2   F4

Fourth image plane

Second focal plane   Fourth focal plane

1022B

P2

FIG. 15

21

2

FIG. 16

22

2

FIG. 17

Multi-focus image generation unit generates a plurality of images, where the multi-focus image generation unit has a plurality of different focal lengths, and focal planes of the plurality of images are located in different positions — S01

Light diffuser screen disposed on an image plane of the multi-focus image generation unit receives the plurality of images generated by the multi-focus image generation unit, and diffuses light beams of the plurality of images — S02

Optical imaging unit images a plurality of images projected to the light diffuser screen, so as to form a plurality of images with different imaging distances — S03

FIG. 18

## INTERNATIONAL SEARCH REPORT

| International application No. |
|---|
| **PCT/CN2021/081908** |

**A.    CLASSIFICATION OF SUBJECT MATTER**

G02B 27/01(2006.01)i

According to International Patent Classification (IPC) or to both national classification and IPC

**B.    FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, WPI, EPODOC, CNKI: 华为技术有限公司, 车辆, 汽车, 抬头, 平视, 显示, 成像, 图像, 多个, 焦距, 位置, 变焦, 定焦, 平面, 扩散, 时间, 时序, 相位, 频率, 切换, 变换, 依次, 人眼, 视觉暂留, 光路, 透镜, 反射, 液体, vehicle, HUD, display, head up, image, imaging, focal length, distance, surface, photodiffusion, time, sequence, phase, frequency, switch, eye, lens, reflect, liquid, vision, persistence

**C.    DOCUMENTS CONSIDERED TO BE RELEVANT**

| Category* | Citation of document, with indication, where appropriate, of the relevant passages | Relevant to claim No. |
|---|---|---|
| X | CN 106896506 A (BOE TECHNOLOGY GROUP CO., LTD.) 27 June 2017 (2017-06-27) description, paragraphs [0004]-[0106], and figures 1-3 | 1, 6-12, 17-24 |
| Y | CN 106896506 A (BOE TECHNOLOGY GROUP CO., LTD.) 27 June 2017 (2017-06-27) description, paragraphs [0004]-[0106], and figures 1-3 | 2-5, 13-16 |
| Y | CN 108780225 A (SHARP CORPORATION) 09 November 2018 (2018-11-09) description, paragraphs [0011]-[0056], and figures 1-14 | 2-5, 13-16 |
| A | CN 109477967 A (WAYRAY SA) 15 March 2019 (2019-03-15) entire document | 1-24 |
| A | CN 105974584 A (HYUNDAI MOBIS CO., LTD.) 28 September 2016 (2016-09-28) entire document | 1-24 |
| A | CN 108663807 A (NINGBO SUNNY AUTOMOTIVE OPTICAL TECHNOLOGY CO., LTD.) 16 October 2018 (2018-10-16) entire document | 1-24 |

☑ Further documents are listed in the continuation of Box C.       ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **01 June 2021** | **18 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/081908**

### C. DOCUMENTS CONSIDERED TO BE RELEVANT

| Category* | Citation of document, with indication, where appropriate, of the relevant passages | Relevant to claim No. |
|---|---|---|
| A | CN 109076201 A (SHENZHEN DAJIANG INNOVATION TECHNOLOGY CO., LTD.) 21 December 2018 (2018-12-21) <br> entire document | 1-24 |
| A | US 2018035103 A1 (SAMSUNG ELECTRONICS CO., LTD.) 01 February 2018 (2018-02-01) <br> entire document | 1-24 |

Form PCT/ISA/210 (second sheet) (January 2015)

## INTERNATIONAL SEARCH REPORT
### Information on patent family members

| International application No. |
| --- |
| **PCT/CN2021/081908** |

| Patent document cited in search report | | | Publication date (day/month/year) | Patent family member(s) | | | Publication date (day/month/year) |
| --- | --- | --- | --- | --- | --- | --- | --- |
| CN | 106896506 | A | 27 June 2017 | US | 2018314065 | A1 | 01 November 2018 |
| | | | | CN | 106896506 | B | 26 July 2019 |
| | | | | US | 10649208 | B2 | 12 May 2020 |
| CN | 108780225 | A | 09 November 2018 | US | 2017261746 | A1 | 14 September 2017 |
| | | | | CN | 108780225 | B | 08 January 2021 |
| | | | | WO | 2017154714 | A1 | 14 September 2017 |
| | | | | US | 9946070 | B2 | 17 April 2018 |
| CN | 109477967 | A | 15 March 2019 | US | 2017329143 | A1 | 16 November 2017 |
| | | | | US | 10591738 | B2 | 17 March 2020 |
| | | | | EP | 3455667 | A2 | 20 March 2019 |
| | | | | EP | 3696597 | A1 | 19 August 2020 |
| | | | | WO | 2017195026 | A2 | 16 November 2017 |
| | | | | RU | 2018143278 | A | 11 June 2020 |
| CN | 105974584 | A | 28 September 2016 | DE | 102016203185 | A1 | 15 September 2016 |
| | | | | CN | 105974584 | B | 10 September 2019 |
| | | | | US | 2016266390 | A1 | 15 September 2016 |
| CN | 108663807 | A | 16 October 2018 | None | | | |
| CN | 109076201 | A | 21 December 2018 | WO | 2019127224 | A1 | 04 July 2019 |
| US | 2018035103 | A1 | 01 February 2018 | US | 10334236 | B2 | 25 June 2019 |
| | | | | KR | 20180012057 | A | 05 February 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010413441X